# EUROPEAN PATENT APPLICATION

(11) **EP 2 979 863 A1**
(43) Date of publication of application: **03.02.2016**
(21) Application number: 14179607.8
(22) Date of filing: 01.08.2014
(51) Int. Cl.: B32B 27/10, B32B 29/00, B65B 25/00

(54) **Multilayer laminate comprising a paper-layer and a polymeric-layer**

(71) Applicant: Schur Flexibles Holding GesmbH, 2500 Baden (AT)
(72) Inventor: Geci, Peter, 07601 Trebisov (SK); Lesny, Peter, 059 21 Svit (SK)
(74) Representative: Schneider, Michael

(57) **Abstract**

A laminate (1) comprising a paper-layer (2) and a polymeric-layer (4) laminated together by the aid of the lamination-layer (3), wherein the laminate (1) has a grammage of equal or less than 45 g/m^2 (grams per square meter), preferred 39 g/m^2.

## Description

### FIELD OF THE INVENTION

The invention relates to a multilayer laminate comprising a paper-layer and a polymeric-layer.

### BACKGROUND OF THE INVENTION

Various food products have been packed into a transparent or colored sheet made of regenerated cellulose, which became generally known as "cellophane". In some countries a registered trademark for cellophane may exist. Properties like low permeability to air, oils, greases, bacteria and water makes it useful for food packaging. In particular its deadfold properties made it a preferred choice to create a wrap or single-/double-ended twist-wrap packaging for relatively small candies or ball like shaped products. Because of its stiffness cellophane also shows good machinability on high speed packaging machines, e.g. producing up to 2300 pieces per minute of twist-wrap packages each filled with a candy even with a cellophane grammage of only 45 g/m^2 (45 grams per square meter).

Many attempts to replace cellophane by paper-based packaging material failed because it was not possible to achieve the mechanical properties of cellophane at comparable yield.

For example waxed paper in many cases is disregarded by customers because of the greasy haptics. Limited deadfold properties, difficulties in printing such a paper and a grammage far beyond 40 g/m^2 were identified as main issues in replacing cellophane by waxed paper.

Various other solutions to use conventional packaging materials such as polypropylene (PP) or high-density polyethylene (HDPE) based films, e.g. mono or bi-axially oriented PP or HDPE, with or without combination with conventional paper or aluminum sheets show severe disadvantages, because the entire grammage of said solutions easily adds up to over 50 g/m^2. In particular in packaging applications for small candies the additional weight contribution by packaging material becomes substantial. But also the customer perception turned out to be dissatisfying because the product (in particular a small candy or a small ball like shaped product) when packed into such a packaging material gives the impression that the packaging material is over dimensioned. This visual and tactile perceivable effect is caused by the fact that such a packaging material is relatively stiff. As a consequence it does not properly adapt its shape to the product to be packed. The difficulties related to its use in wrap or twist-wrap packaging processes remained unsolved.

Also polymeric mono films (e.g. bi-axially oriented polypropylene or HDPE) were considered as a replacement of cellophane. These attempts show insufficient deadfold properties in the standard range of grammage of conventional cellophane.

One of the main issues in the attempts to replace cellophane was the lack of machinability of the tested replacement packaging material when used on standard packaging machines, designed to use cellophane as packaging material. Typically cellophane packaging material is moved with very high speed into the packaging zone. In the packaging zone the cellophane is wrapped around the product. When testing conventional packaging materials as attempted replacement material on such machines it turned out that the replacement material significantly deforms when moved with high speed into the packaging zone. For example, tested replacement packaging materials deformed along its edges, e.g. showed waves, folded inside, etc., when moved with high speed. Hence, proper interaction with parts of the machine designed to wrap the replacement product around the product to be packed was no longer guaranteed and the packages, if at all created, were defective. This effect was even boosted when the grammage of the tested replacement packaging materials was reduced in order to be competitive with the grammage of conventional cellophane.

As a consequence the replacement of cellophane in its standard packaging applications would have demanded a different machine design in order to cope with material properties of tested conventional replacement packaging materials. Given the cost of such machines this requirement turned out to be a significant obstacle for the acceptance of conventional replacement packaging materials in the cellophane packaging market.

However, a significant drawback of cellophane is its entire production process. It starts with the environmentally unfriendly production of the raw material for producing cellophane, which is the production of cellulose. It continues with the production process of cellophane itself that is relatively expensive because of two basic problems. One of the problems is the huge amount of energy needed to produce cellophane. The other problem is given by the use of plenty of toxic and/or dangerous chemical products in the production process. The use of such substances not only causes troubles during the production but also the production, storing and proper disposal of such chemicals is an issue. Hence, the total production process, in particular when including the processing of such chemicals to be available for the production process and the postproduction of such chemicals after usage in the production process, is extremely environmentally unfriendly.

Therefore, it is an object of the present invention to overcome the problems identified above and to provide a packaging material that is capable to replace cellophane while avoiding the negative environmental effects of the cellophane production.

### SUMMARY OF THE INVENTION

In order to achieve this object there is provided a multilayer laminate comprising a paper-layer and a polymeric-layer laminated together by the aid of a lamination-layer, wherein the laminate has a grammage of equal or less than 45 g/m^2 (grams per square meter), preferred 39 g/m^2.

Further to this, the object of the invention is also achieved by the use of the laminate according to the invention as a wrap or twist-wrap packaging material on a packaging machine.

Further to this, the object of the invention is also achieved by a wrap- or twist-wrap packaging made of the laminate according to the invention.

The invention provides the advantage that a new super thin laminate is created. The super thin laminate avoids the drawbacks of cellophane, in particular the negative environmental effects linked together with the manufacturing process of cellophane because its manufacturing process is totally different and avoids the chemicals used in the manufacturing process of the cellophane. Hence, its entire lifecycle is significantly more environmental friendly when compared with cellophane.

The laminate is based on two essential components (layers), which are a paper-layer, e.g. a sheet of paper, and a polymeric-layer, e.g. a film, foil or web of polymeric material. The polymeric-layer and the paper-layer realize the so-termed substrate-layers of the laminate. The two essential layers are laminated together. The lamination-layer may be realized by a material with adhesive properties. The polymeric-layer may be realized by sub-layers, which are e.g. co-extruded.

The super thin laminate consists in its minimum configuration of only one paper-layer and only one polymeric-layer laminated together by the aid of the lamination-layer.

By defining the upper limit of grammage of 45 g/m^2, preferred 39 g/m^2, for the entire laminate all components (layers of the laminate) must be extremely thin and would therefore not be considered to be feasible as packaging materials for the targeted twist and / or wrap packaging applications when each taken alone. These components used alone would lack in machinability on packaging machines, in particular on high-speed applications, for twist and / or wrap packaging applications. Also the desired mechanical properties needed to create the targeted warp and / or twist packages are not available for each component when taken alone.

In front of this background the invention now first time ever provides a practicable solution to present attempts used as replacement of cellophane packaging material.

In particular the invention teaches to combine such super thin components (layers) to realize a laminate that on the one hand provides the desired structural stability (e.g. stiffness) to be used on high speed wrap and / or twist packaging machines (e.g. used to process cellophane) and on the other hand provides the required mechanical properties (e.g. deadfold) to allow the realization of wrap and / or twist packages with a look and feel equivalent to cellophane packages. The combination of appropriate stiffness and deadfold properties allows for sufficient deformation-free rapid movement of the laminate in the packaging machine as well as proper folding of the laminate in order to realize the desired wrap or twist-wrap packaging. In particular the stiffness of the super thin laminate copes with the effect of air-resistance, which would otherwise bend or deform the laminate during the packaging process.

The laminate according to the invention provides a proper protection of the packed product because the polymeric-layer adds functions like required strength and tear resistance. Also barrier properties, the possibility to achieve different colours and easy printability are achieved by the polymeric-layer. However the polymeric-layer alone lacks in deadfold properties. The desired stiffness and deadfold properties, which are needed to keep the folded or twisted laminate in its folded or twisted form, is mainly achieved by the paper-layer.

Hence, the laminate not only provides the basic mechanical properties of cellophane, which made it so popular in the wrap and / or twist packaging industry. In fact the inventive laminate also exceeds the basic requirements made for a proper cellophane replacement by providing a significantly reduced grammage. This in fact contributes to a reduced weight contribution of packaging material, which consequently allows more cost efficient packaging solutions and lower fright expenses.

The dependent claims and the subsequent description disclose particularly advantageous embodiments and features of the invention.

According to one aspect of the invention the grammage of the polymeric-layer is in the range of 2,7 to 21 g/m^2.

According to one embodiment the polymeric-layer is made of polyester-film, e.g. oriented polyester (OPET), and the grammage of the polyester-film is in the range of 4,2 to 21 g/m^2, preferred 4,2 to 14 g/m^2, more preferred 11.3 to 14 g/m^2. Polyester is the preferred choice if higher stiffness or higher temperature stability of the laminate is demanded. This contributes to the desired deadfold property of the laminate. But also its temperature resistance is of essence for packaging application that utilize heat sealing to adhere different parts of the laminate to each other in order to sustainably close a package made of the laminate.

According to another embodiment the polymeric-layer is made of polypropylene-film, preferred oriented polypropylene, more preferred bi-axially oriented polypropylene, and the grammage of the polypropylene-film is in the range of 2,7 to 13,7 g/m^2, preferred 2,7 to 9,1 g/m^2, more preferred 8,1 to 9.1 g/m^2. This embodiment is of particular advantage because the combination of the polypropylene-film with the paper-layer achieves perfect twist properties.

In both embodiments these ranges of grammage are equivalent to thickness ranges of 3 to 15 * 10^-6 m, preferred 3 to 10 * 10^-6 m, more preferred 8 to 10 * 10^-6 m. The preferred and more preferred ranges balance the parameter of structural stability against low packaging material weight.

The polymeric-layer may be transparent or coloured.

According to a further aspect of the invention the grammage of the paper-layer is in the range of 10 to 25 g/m^2, preferred 12 to 25 g/m^2, more preferred 12 to 15 g/m^2. The preferred and more preferred ranges are selected to tune and improve the deadfold property of the laminate. But also the stiffness required for high-speed machinability is optimized in the defined ranges. The paper-layer can be any kind of paper, e.g. Kraft paper, bleached or unbleached paper, colored e.g. brown, or even white. White paper does not disturb the glossy optics of the laminate.

The grammage ranges of the paper-layer may be combined with the grammage ranges of the polymeric-layer, e.g. the polyester-film or the polypropylene-film, in any desired manner in order to achieve the desired wrap and / or twist properties and / or machinability. However, it is preferred to combine the preferred grammage range of the polymeric-layer and preferred grammage ranges of the paper-layer or the more preferred grammage ranges in order to achieve the desired packaging material properties.

In order to not exceed the total maximum grammage of the laminate and / or in order to keep its influence low or insignificant the lamination-layer has a grammage of 1 to 7 g/m^2, preferred 1 to 3 g/m^2.

The laminate may also comprise a printing-layer. The printing-layer may be realized as a continuous color-layer, e.g. when coloring the laminate in a particular color. The printing layer may also be realized by individual color-patterns, e.g. in order to create alphanumeric symbols or other symbols and the like, e.g. in a limited area.

In a preferred embodiment the laminate comprises a printing layer and the grammage of the printing-layer is in the range of 1,0 to 3 g/m^2.

The printing layer may be localized on that side of the polymeric-layer that faces away from the lamination-layer. However, in a preferred embodiment the printing-layer may be localized on that side of the polymeric-layer that faces the lamination-layer. This localization of the printing-layer protects the color or symbols realizing the printing-layer from being scratched.

The printing-layer may also be provided on the paper-layer. If located on the paper-layer it is preferred to have it localized on that side of the paper-layer that faces the lamination layer. If the printing-layer is realized on the paper-layer it is preferred to have a paper-layer with a grammage in the range of 18 to 25 g/m^2. This grammage range provides the advantage that the paper-layer shows sufficient strength, little porosity and sufficient homogeneity so to allow for proper printing.

According to a further aspect of the invention the laminate may comprise a sealing-layer. The sealing-layer may be provided on either only one side of the laminate or on both sides, e.g. in order to provide better sealing properties. Advantageously the grammage of the sealing-layer is in the range of 2 to7 g/m^2. Dependent on the type of product the sealing-layer is pressure or heat sensitive.

In general, the paper-layer can be used as the outside of the laminate.

However, in some applications of the laminate it may be of advantage that the paper-layer is covered by a protective non-sealing layer with a grammage of approx. 2 g/m^2. The protective layer may be made of a lacquer layer protecting against scratches and / or environmental impacts.

According to the examples discussed above the minimum grammage of the laminate may be given with approximately 13,7 g/m^2 (for example for a laminate with a polypropylene-film with 2,7 g/m^2, a paper-layer with 10 g/m^2, and a lamination-layer with 1 g/m^2). However, by applying new technologies the minimum grammage of the laminate may even be lower.

The advantageous properties of the laminate according to the invention first time ever allow the use of the laminate on packaging machines, which are designed to run cellophane, in order to create cellophane-replacement packages on such a type of machines, in particular at high speed of up to 2300 pieces per minute, e.g. in case of packaging of little candies. However, cellophane-replacement packages may also be created on other types of machines. The laminate according to the invention may also be used to replace cellophane for the packaging of larger products having a weight of 0,5 to 5 or even up to 10 kilograms (kg).

### BRIEF DESCRIPTION OF THE DRAWING

Other objects and features of the present invention will become apparent from the following detailed descriptions considered in conjunction with the accompanying drawings. It is to be understood, however, that the drawings are designed and the description shall be used solely for the purposes of illustration of the invention and not as a definition of the limits of the invention. The drawings schematically show in:
- Fig. 1: a cross sectional view of a laminate according to an embodiment of the invention;
- Fig. 2: a further embodiment of the laminate;
- Fig. 3: a double twist and wrap packaging made of the laminate according to the invention;
- Fig. 4: a single twist packaging made of said laminate;
- Fig. 5: a further single twist packaging made of said laminate;
- Fig. 6: a wrap packaging made of said laminate.

### DETAILED DESCRIPTION OF EMBODIMENTS

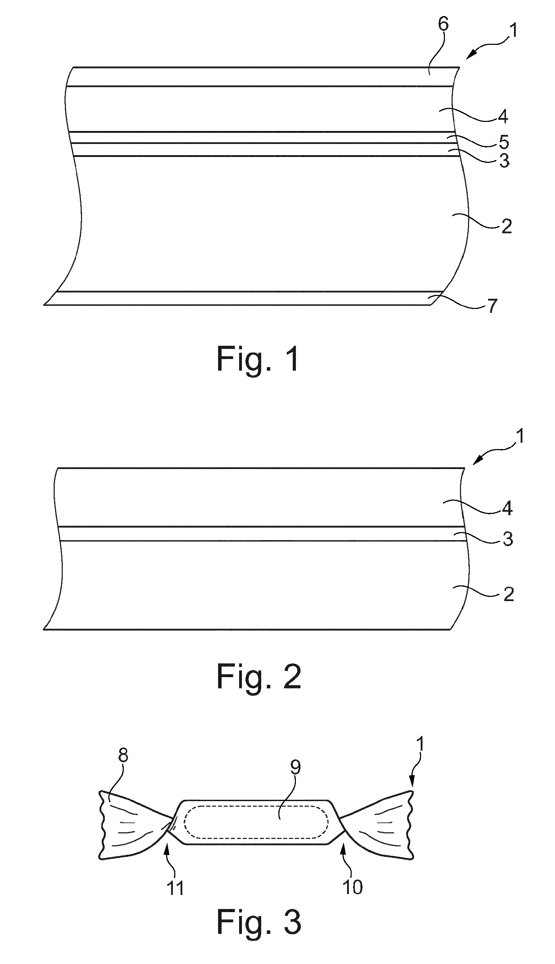

Fig. 1 shows a profile of a laminate 1. The laminate 1 shows a paper-layer 2, a lamination layer 3, a polymeric-layer 4 laminated together with the paper-layer by the aid of the lamination-layer 3, a printing layer 5 created on that side of the polymeric-layer 4 that faces the lamination-layer 3, a first sealing-layer 6 created on that side of the polymeric-layer 4 that faces away from the lamination-layer 3 and a second sealing layer 7 created on that side of the paper-layer 2 that faces away from the lamination layer 3.

The laminate has a grammage in the range of 34,5 - 36,5 g/ m^2 dependent on the grammage of the printing layer 5. The polymeric-layer 4 is realized as polyester-film and has a grammage of 12 g/m^2, the paper-layer 2 has a grammage of 14 g/m^2, the lamination-layer 3 has a grammage of 2,5 g/m^2, the printing-layer 5 may have a grammage of 1 to 3 g/m^2, e.g. in the present case 2 g/m^2, and the two sealing-layers 6, 7 have a total grammage of 5 g/m^2.

In a second embodiment the polymeric-layer 4 is realized as polypropylene-film with a grammage of 9,1 g/m^2. All other structural components (layers) of the laminate 1 remain unchanged when compared with the laminate 1 according to Fig. 1. Hence, dependent on the grammage of the printing-layer 5 the total grammage of the laminate 1 is reduced to a range of 31,6 - 33,6 g/m^2.

In a third embodiment the two sealing-layers 6 and 7 shown in the first embodiment (see Fig. 1) are avoided which reduces the total grammage of the laminate 1 to a range of 29,5 - 31,5 g/m^2.

In a fourth embodiment that modifies the third embodiment also the printing-layer 5 is avoided, which further reduces the grammage by approximately 1 - 3 g/m^2 down to a range of 26,5 - 30,5 g/m^2. This structure shown in Figure 2 defines the minimum number of components (layers) for the laminate 1, which are the polymeric-layer 4, the lamination-layer 3 (min. 1 g/m^2) and the paper-layer 2 (min. 10 g/m2). If a polyester-film is used as the polymeric-layer 4 the minimum grammage of the laminate 1 is 15,2 g/m^2. If a polypropylene-film is used as the polymeric-film 4 the minimum grammage of the laminate is 13,7 g/m^2.

Figure 3 shows a twist-wrap packaging 8 made of the laminate 1 according to the invention that covers a candy 9. The packaging 8 shows two twisting zones 10, 11.

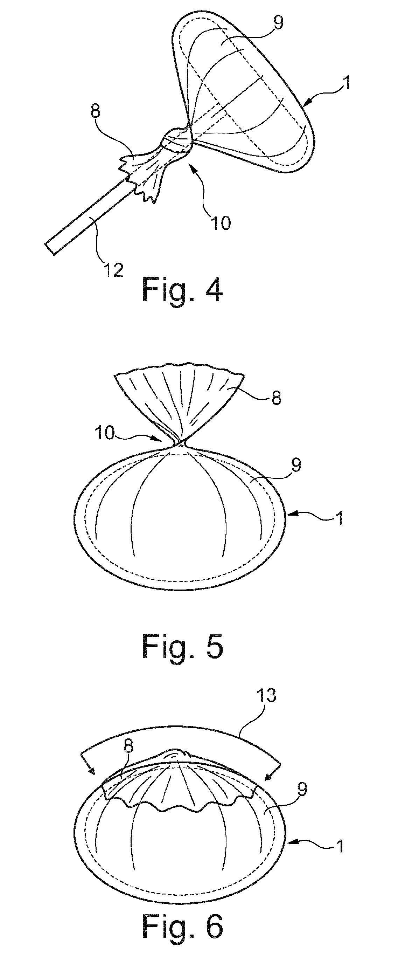

Figure 4 shows a candy 9 attached to a shaft 12. The candy 9 is covered by the twist-wrap packaging 8 that shows only one twist zone 10 where the laminate is twisted around the shaft 12.

Figure 5 shows a candy 9 similar to that shown in Figure 4 - but without the shaft 12 - covered by a twist-warp packaging 8 having one twist zone 10.

Figure 6 shows a product 9 (e.g. food product, e.g. a candy 9) having an ellipsoid or ball like shape that is packed into a wrap packaging 8 made of the laminate 1. In contrast to the aforementioned packages 8 the product is only wrapped into the laminate 1 without a twisting zone and the excess laminate not directly covering the product is simply folded back and pressed against that part of the laminate 1 that directly comes in contact with the product 9 in an overlapping zone 13. Instead of twisting the excess laminate 1 the package 8 may be closed by sealing parts of the laminate 1 with each other in the overlapping zone 13 or covering the laminate 1 in the overlapping zone 13 with an adhesive label (not shown).

Although the application of the laminate for candy packages is described throughout the description of figures, it should be noted that the laminate might also be used in various other packaging applications for products different from candies, e.g. sausages, bread, vegetables and so on. Such other products may have a weight of 0,5 to 5 or even up to 10 kilograms.

It should be noted that the above-mentioned embodiments illustrate rather than limit the invention, and that those skilled in the art will be able to design many alternative embodiments without departing from the scope of the appended claims. In the claims, any reference signs placed between parentheses shall not be construed as limiting the claim. The word "comprising" does not exclude the presence of elements or steps other than those listed in a claim. The word "a" or "an" preceding an element does not exclude the presence of a plurality of such elements. The mere fact that certain features are recited in mutually different dependent claims does not indicate that a combination of these features cannot be used to advantage.

## Claims

1. A multilayer laminate (1) comprising a paper-layer (2) and a polymeric-layer (4) laminated together by the aid of a lamination-layer (3), wherein the laminate (1) has a grammage of equal or less than 45 g/m^2 (grams per square meter), preferred 39 g/m^2.

2. The laminate (1) according to claim 1, wherein the grammage of the polymeric-layer (4) is in the range of 2,7 to 21 g/m^2.

3. The laminate (1) according to claim 2, wherein the polymeric-layer (2) is made of polyester-film and the grammage of the polyester-film is in the range of 4,2 to 21 g/m^2, preferred 4,2 to 14 g/m^2, more preferred 11,3 to 14 g/m^2.

4. The laminate (1) according to claim 2, wherein the polymeric-layer (4) is made of polypropylene-film, preferred oriented polypropylene, more preferred bi-axially oriented polypropylene, and the grammage of the polypropylene-film is in the range of 2,7 to 13,7 g/m^2, preferred 2,7 to 9,1 g/m^2, more preferred 8,1 to 9,1 g/m^2.

5. The laminate (1) according to any of the preceding claims, wherein the grammage of the paper-layer is in the range of 10 to 25 g/m^2, preferred 12 to 25 g/m^2, more preferred 12 to 15 g/m^2.

6. The laminate (1) according to any of preceding claims, wherein the lamination-layer (3) has a grammage of 1 to 7 g/m^2, preferred 1 to 3 g/m^2.

7. The laminate (1) according to any of the preceding claims, wherein laminate (1) comprises a printing-layer (5).

8. The laminate (1) according any of the preceding claims, wherein the laminate (1) comprises a printing layer (5) and the grammage of the printing-layer (5) is in the range of 1,0 to 3 g/m^2.

9. The laminate (1) according to any of the preceding claims, wherein a printing-layer (5) is localized on that side of the polymeric-layer (4) that faces the lamination-layer (3).

10. The laminate (1) according to any of the preceding claims 1-8, wherein the printing-layer (5) is localized on that side of the paper-layer (2) that faces the lamination-layer (3).

11. The laminate (1) according to claims 10, wherein the paper-layer (2) has a grammage in the range of 18 to 25 g/m^2.

12. The laminate (1) according to any of the preceding claims, wherein the laminate (1) comprises a sealing-layer (6, 7).

13. The laminate according to claim 12, wherein the grammage of the sealing-layer (6, 7) is in the range of 2 to 7 g/m^2.

14. The laminate (1) according to claim 12 or 13, wherein the sealing-layer (6, 7) is pressure or heat sensitive.

15. A use of the laminate (1) according to any of the claims 1 to 14 as a wrap or twist-wrap packaging material on a packaging machine.

16. The use according to claim 15, wherein the machine is designed to run cellophane as packaging material.

17. A wrap- or twist-wrap packaging (8) made of the laminate 1 according to any of the claims 1 to 14.

18. The packaging (8) according to claim 17 made by the use according to claim 15 or 16.
